# EUROPÄISCHE PATENTSCHRIFT

(11) **EP 1 437 669 B1**
(45) Veröffentlichungstag und Bekanntmachung des Hinweises auf die Patenterteilung: **26.07.2006**
(21) Anmeldenummer: 03090003.9
(22) Anmeldetag: 08.01.2003
(51) Int. Cl.: G06Q 20/00

(54) **Verfahren zum Durchführen von Zahlungsvorgängen mittels eines Telekommunikationsnetzes**
Method for carrying out payments using a communications network
Procédé pour la réalisation de paiements au moyen d'un réseau de télécommunication

(43) Veröffentlichungstag der Anmeldung: 14.07.2004
(73) Patentinhaber: SIEMENS AKTIENGESELLSCHAFT, 80333 München (DE)
(72) Erfinder: Berg, Andreas, Dr., 13591 Berlin (DE); Lilge, Manfred, 14195 Berlin (DE); Ryll, Thomas, 10823 Berlin (DE)

(56) Entgegenhaltungen:
- EP-A- 1 103 934
- EP-A- 1 124 208
- WO-A-00/42581
- WO-A-01/86598
- WO-A-02/079926
- US-A1- 2002 087 469

## Beschreibung

Die Erfindung betrifft ein Verfahren zum elektronischen Verarbeiten von Zahlvorgänge betreffenden Nachrichten mittels eines Telekommunikationsnetzes.

Es besteht z. B. beim sogenannten "elektronischen Handel" (e-commerce) die Notwendigkeit, Zahlungsvorgänge unter Nutzung von Telekommunikationsnetzen durchzuführen. Solche Zahlungsvorgänge können z. B. bei der Erbringung von kostenpflichtigen Diensten oder Leistungen (z. B. Lieferung von Informationen, Daten oder Waren) über die Telekommunikationsnetze auftreten. Als derartige Telekommunikationsnetze werden beispielsweise das Internet, Telefonfestnetze oder Mobilfunknetze der zweiten oder dritten Generation genutzt. Zur Bezahlung der Dienste oder Leistungen werden Verfahren beispielsweise für das bargeldlose Bezahlen unter Nutzung eines mobilen Endgerätes (z. B. eines Mobiltelefons, eines Laptops, persönlichen digitalen Assistenten PDA oder eines Palmtops) und/oder eines Internetendgerätes (z. B. eines Internetrechners) benötigt. Es werden jedoch auch außerhalb des "elektronischen Handels" und unabhängig von der Erbringung von Diensten Verfahren zum Durchführen von Zahlungsvorgängen benötigt, z. B. bei Spenden.

Mitunter führen Zahlungssender oder Zahlungsempfänger die relativ aufwendigen Zahlungsvorgänge nicht selbst aus, sondern bedienen sich der Hilfe von Zahlungsdiensteleistern, sogenannten "Payment Service Providern", welche Zahlungssysteme zum Abwickeln von Zahlungsvorgängen betreiben. An derartigen Zahlungsvorgängen sind also mitunter ein Zahlungssender (Zahlungsschuldner, z. B. ein Kunde, Consumer), ein Zahlungsempfänger (z. B. ein Händler, Service Provider, Merchant) und ein Zahlungssystem eines Zahlungsdienstleisters beteiligt, wobei sowohl der Zahlungsschuldner als auch der Zahlungsempfänger die Dienste des Zahlungsdienstleisters bzw. die Dienste des Zahlungssystems in Anspruch nehmen.

Aus der europäischen Patentanmeldung EP 1103934 A2 ist ein Dateneingabe- und Datenübertragungsverfahren zur Abwicklung eines Zahlungsvorganges in einem Datennetz bekannt. Bei diesem Verfahren wird ein Satz von Konto- bzw. Zahlungswegdaten oder ein elektronisches Guthaben eines ersten Nutzers des Datennetzes an einen zweiten Nutzer übertragen. Dazu wird in einem Kontodatenspeicher eines Dienst-Servers mindestens ein Satz von Konto- bzw. Zahlungswegdaten und/oder ein elektronisches Guthaben des ersten Nutzers gespeichert. Auf ein Zahlungs-Anforderungssignal eines Endgerätes des zweiten Nutzers und ein am Endgerät des ersten Nutzers eingegebenes Bestimmungssignal hin wird von dem Dienst-Server der bestimmte Satz von Konto- bzw. Zahlungswegdaten oder der bestimmte Teil des elektronischen Guthabens an das Endgerät des zweiten Nutzers ausgegeben.

Aus der internationalen Patentanmeldung WO 01/86598 A1 ist ein Verfahren zum Übertragen von digitalen Zahlungsaufträgen von einem ersten Mobiltelefon zu einem zweiten Mobiltelefon bekannt. Bei diesem Verfahren wird eine einen Zahlungsauftrag betreffende Anfrage von dem ersten Mobiltelefon an einen SMS-Server (Short-Message-Server) gesendet. Der SMS-Server sendet daraufhin einen Zahlungsauftrag an das erste Mobiltelefon, welches den Zahlungsauftrag an das zweite Mobiltelefon überträgt. Das zweite Mobiltelefon erkennt den Zahlungsauftrag an, indem es den Zahlungsauftrag an den SMS-Server weitersendet. Daraufhin übermittelt der SMS-Server den Zahlungsauftrag über ein Bankinterface an eine Bank.

Es ist Aufgabe der vorliegenden Erfindung, ein besonders vielseitig einsetzbares Verfahren zum Durchführen von Zahlungsvorgängen unter Nutzung eines Telekommunikationsnetzes anzugeben.

Diese Aufgabe wird erfindungsgemäß gelöst durch ein Verfahren zum elektronischen Verarbeiten von Zahlvorgänge betreffenden Nachrichten mittels eines Telekommunikationsnetzes, mit einem Zahlungssystem im Telekommunikationsnetz, mit einem dem Zahlungssystem zugeordneten Datenspeicher, in dem ein Zahlungssender-Datensatz abgespeichert ist, der Informationen über eine Zahlungsweise des Zahlungssenders enthält, mit einem mit dem Telekommunikationsnetz verbundenen Zahlungs-Finanzrechner, und mit einem mit dem Telekommunikationsnetz verbundenen Zahlungsempfänger-Finanzrechner, wobei bei dem Verfahren
- von dem Zahlungs-Finanzrechner eine Zahlungssender-Nachricht an das Zahlungssystem übermittelt wird, die einen Zahlungsbetrag, ein Kennzeichen des Zahlungssenders, ein Kennzeichen des Zahlungsempfängers und eine die Zahlungsweise des Zahlungssenders beschreibende Zahlungsinformation enthält,
- aufgrund des in der Zahlungssender-Nachricht enthaltenen Kennzeichens des Zahlungssenders der dem Zahlungssender zugehörige Zahlungssender-Datensatz von dem Zahlungssystem aus dem Datenspeicher ausgelesen wird,
- von dem Zahlungssystem überprüft wird, ob die mit der Zahlungssender-Nachricht übermittelte Zahlungsinformation des Zahlungssenders mit der in dem Zahlungssender-Datensatz abgespeicherten Zahlungsinformation übereinstimmt,
- bei einer Übereinstimmung aus einem dem Zahlungsempfänger zugehörigen Zahlungsempfänger-Datensatz Informationen über die Zahlungsabwicklungsweise des Zahlungsempfängers und Rechnerdaten des für diese Zahlungsabwicklungsweise geeigneten Zahlungsempfänger-Finanzrechners ausgelesen werden, wobei aufgrund des in der Zahlungssender-Nachricht übermittelten Kennzeichens des Zahlungsempfängers der Zahlungsempfänger-Datensatz aus dem Datenspeicher ausgelesen wird,
- anhand dieser Informationen eine Zahlungsempfänger-Nachricht erzeugt wird, welche den Zahlungsbetrag und das Kennzeichen des Zahlungssenders enthält und welche derart aufgebaut ist, dass ihr Inhalt bei Empfang von dem Zahlungsempfänger-Finanzrechner korrekt interpretiert wird, und
- anhand der Rechnerdaten des Zahlungsempfänger-Finanzrechners diese Zahlungsempfänger-Nachricht an den Zahlungsempfänger-Finanzrechner gesendet wird, woraufhin der Zahlungsempfänger-Finanzrechner einen Zahlungseingang registriert.

Bei diesem Verfahren ist besonders vorteilhaft, dass Zahlungsvorgänge selbst dann durchgeführt werden können, wenn der Zahlungssender eine Zahlungsweise zur Teilnahme an dem erfindungsgemäßen Verfahren nutzt, der Zahlungsempfänger jedoch eine Zahlungsabwicklungsweise, welche sich von der ersten Zahlungsweise des Zahlungssenders unterscheidet, zur Teilnahme an dem Verfahren nutzt. Da in dem Datenspeicher des Zahlungssystems sowohl die Zahlungsweise des Zahlungssenders als auch die Zahlungsabwicklungsweise des Zahlungsempfängers abgespeichert sind, kann das Zahlungssystem vorteilhafterweise eine "Mittlerfunktion" zwischen der Zahlungsweise des Zahlungssenders und der Zahlungsabwicklungsweise des Zahlungsempfängers durchführen. Ebenso ist von Vorteil, dass das Zahlungssystem anhand der in dem Datenspeicher gespeicherten Informationen die Zahlungsempfängernachricht derart aufbauen (formatieren) kann, dass ihr Inhalt von dem der jeweiligen Zahlungsabwicklungsweise des Zahlungsempfängers zugeordneten Zahlungsempfänger-Finanzrechner empfangen und korrekt ausgewertet bzw. interpretiert wird. Aus diesen Gründen können Zahlungsvorgänge auch zwischen Zahlungssendern und Zahlungsempfängern durchgeführt werden, welche verschiedenste, jeweils unterschiedliche Zahlungsweisen und Zahlungsabwicklungsweisen benutzen.

Das erfindungsgemäße Verfahren kann so ausgestaltet sein, dass in dem Zahlungssender-Datensatz Informationen über mehrere Zahlungsweisen des Zahlungssenders enthalten sind, und von dem zahlungssystem nacheinander solange überprüft wird, ob die durch die Zahlungsinformation beschriebene Zahlungsweise des Zahlungssenders mit einer der in dem Zahlungssender-Datensatz abgespeicherten Zahlungsweisen übereinstimmt, bis eine Übereinstimmung auftritt oder bis alle abgespeicherten Informationen über die Zahlungsweisen überprüft sind. Bei dieser Ausgestaltungsform des Verfahrens ist von Vorteil, dass ein Zahlungssender mehrere verschiedene Zahlungsweisen benutzen kann und - situationsabhängig verschieden - unter Nutzung verschiedener Zahlungsweisen und entsprechend verschieden ausgestalteter Zahlungssender-Nachrichten an dem erfindungsgemäßen Verfahren teilnehmen kann.

Das erfindungsgemäße Verfahren kann auch so ablaufen, dass in dem Zahlungsempfänger-Datensatz Informationen über mehrere Zahlungsabwicklungsweisen des Zahlungsempfängers enthalten sind, und von dem Zahlungssystem anhand von einer vorbestimmten, in dem Zahlungsempfänger-Datensatz gespeicherten Regel eine der mehreren Zahlungsabwicklungsweisen ausgewählt und Informationen über diese ausgewählte Zahlungsabwicklungsweise ausgelesen werden. Dadurch kann vorteilhafterweise der Zahlungsempfänger verschiedene Zahlungsabwicklungsweisen beim Empfang von Zahlungen nutzen und (schon im Vorfeld des erfindungsgemäßen Verfahrens) durch Formulierung der Regeln entscheiden, welche seiner mehreren Zahlungsabwicklungsweisen bei einem konkreten Zahlungsvorgang anzuwenden ist.

Das erfindungsgemäße Verfahren kann auch so ausgestaltet sein, dass vor der Erzeugung der Zahlungsempfänger-Nachricht von dem Zahlungssystem auf einem dem Zahlungsempfänger zugeordneten Zwischenkonto der Zahlungsbetrag und das Kennzeichen des Zahlungssenders zwischengespeichert werden, der Zahlungsbetrag mit auf diesem Zwischenkonto bereits zwischengespeicherten weiteren Zahlungsbeträgen aufsummiert wird, und erst bei Erreichen des Endes eines vorbestimmten zeitlichen Abrechnungszeitraumes eine Zahlungsempfänger-Nachricht erzeugt wird, die anstelle des Zahlungsbetrages die aufsummierten (aufaddierten) Zahlungsbeträge enthält. Bei diesem Ablauf des Verfahrens braucht vorteilhafterweise nicht bei jedem Empfang einer Zahlungssender-Nachricht von dem Zahlungssystem eine Zahlungsempfänger-Nachricht erzeugt und an den Zahlungsempfänger-Finanzrechner gesendet zu werden. Durch die Summation der einzelnen Zahlungsbeträge auf dem Zwischenkonto ist es vielmehr ausreichend, wenn am Ende des vorbestimmten zeitlichen Abrechnungszeitraumes eine einzige Zahlungsempfänger-Nachricht erzeugt wird, mit der ein Transfer der aufaddierten Zahlungsbeträge zu dem Zahlungsempfänger-Finanzrechner ausgelöst wird.

Das erfindungsgemäße Verfahren kann so ablaufen, dass Informationen über einen Geldbetrag von einem Finanzrechner einer kreditkartenausstellenden Bank des Zahlungssenders an den Zahlungs-Finanzrechner einer Kreditkartentransaktionen ausführenden, dem Zahlungssystem zugeordneten Bank übermittelt wird, und daraufhin von dem Zahlungs-Finanzrechner die Zahlungssender-Nachricht an das Zahlungssystem übermittelt wird. Diese Ausgestaltungsform des erfindungsgemäßen Verfahrens ermöglicht einem Zahlungssender Zahlungsschritte unter Benutzung einer Kreditkarte bzw. der Leistungen einer Kreditkarten ausstellenden Bank durchzuführen.

Zur weiteren Erläuterung des erfindungsgemäßen Verfahrens ist in der
Figur 1 ein Ausführungsbeispiel eines Telekommunikationsnetzes zum Durchführen des erfindungsgemäßen Verfahrens zusammen mit beispielhaften Verfahrensschritten, in
Figur 2 ein weiteres Ausführungsbeispiel eines Telekommunikationsnetzes zur Durchführung des erfindungsgemäßen Verfahrens gemeinsam mit weiteren Verfahrensschritten, in
Figur 3 ein Ausführungsbeispiel eines Zahlungssender-Datensatzes, eines Zahlungsempfänger-Datensatzes, einer Zahlungssender-Nachricht und einer Zahlungsempfänger-Nachricht und in
Figur 4 ein weiteres Ausführungsbeispiel eines Zahlungssender-Datensatzes, eines Zahlungsempfänger-Datensatzes, einer Zahlungssender-Nachricht und einer Zahlungsempfänger-Nachricht dargestellt.

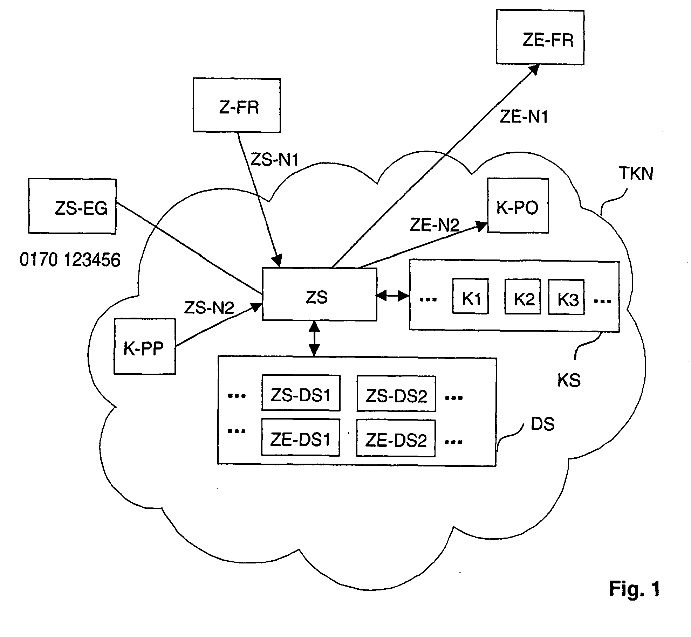

In Figur 1 sind Elemente eines Telekommunikationsnetzes TKN dargestellt, wobei es sich bei diesem Telekommunikationsnetz um ein Mobilfunknetz der zweiten oder dritten Generation handelt. Dies ist jedoch nur beispielhaft zu verstehen; als Telekommunikationsnetz kann z.B. auch das Internet, ein firmeneigenes Intranet oder ein Telefon-Festnetz verwendet werden. Zu diesen Netzelementen gehört ein Zahlungssystem ZS eines Zahlungsdienstleisters (Payment Service Provider, PSP). Der Zahlungsdienstleister kann identisch mit dem Betreiber (dem sogenannten Network Operator) des Mobilfunknetzes sein. Derartige Zahlungssysteme sind bekannt und käuflich zu erwerben. Als ein Beispiel sei auf die Schrift "Mobile Payment, Business White Paper for Corporates" der Siemens AG, Edition 04.2001 verwiesen, in dem ein "Pay@once" genanntes Zahlungssystem beschrieben und für den Kauf eines solchen geworben wird. Erfindungsgemäß ist dieses Zahlungssystem ZS mit einem Datenspeicher DS verbunden, in welchem ein erster Zahlungssender-Datensatz ZS-DS1, ein zweiter Zahlungssender-Datensatz ZS-DS2, ein erster Zahlungsempfänger-Datensatz ZE-DS1 und ein zweiter Zahlungsempfänger-Datensatz ZE-DS2 abgespeichert sind. Neben diesen erwähnten Datensätzen können in dem Datenspeicher DS natürlich weitere zahlungssender-Datensätze von verschiedensten Zahlungssendern und Zahlungsempfänger-Datensätze von verschiedensten Zahlungsempfängern abgespeichert sein.

Der Zahlungssender verfügt über einen Zahlungssender-Endgerät ZS-EG, bei dem es sich in dem vorliegenden Ausführungsbeispiel um ein Mobiltelefon handelt, welches mit dem Mobilfunknetz TKN verbunden ist. Diesem Zahlungssender-Endgerät ZS-EG ist ein Kennzeichen des Zahlungssenders zugeordnet; in diesem Beispiel handelt es sich bei dem Kennzeichen des Zahlungssenders um die Mobilfunkrufnummer (MSISDN = Mobile Station ISDN Number) "0170 123456". Auch der Zahlungsempfänger ist in dem vorliegenden Ausführungsbeispiel ein Mobilfunkteilnehmer, welcher ein Zahlungsempfänger-Endgerät (in der Figur nicht dargestellt) zur Kommunikation verwendet. Dem Zahlungsempfänger bzw. dem Zahlungsempfänger-Endgerät ist ein Kennzeichen des Zahlungsempfängers, in diesem Beispiel die Mobiltelefonnummer "0171 876543", zugeordnet. Es ist jedoch nur beispielhaft zu verstehen und keineswegs zwingend notwendig, dass der Zahlungsempfänger über ein Zahlungsempfänger-Endgerät verfügt, welchem das Kennzeichen des Zahlungsempfängers zugeordnet ist. Es ist lediglich notwendig, dass dem Zahlungsempfänger auf irgendeine Art und Weise ein Kennzeichen zugeordnet ist (denkbar wäre z.B. auch eine Registrier-, Kenn- oder Kontonummer), anhand der der Zahlungsempfänger identifiziert werden kann. Es ist allerdings vorteilhaft, als Kennzeichen die Mobiltelefonnummer zu verwenden, wenn der Zahlungsempfänger ein Mobiltelefonteilnehmer ist.

Über einen Kommunikationskanal ist ein Zahlungs-Finanzrechner Z-FR, über den den Zahlungssender betreffende finanzielle Transaktionen bearbeitet werden, mit dem Zahlungssystem ZS des Telekommunikationsnetzes verbindbar. Bei dem Zahlungs-Finanzrechner kann es sich beispielsweise um das Zahlungssender-Endgerät, um einen Personalcomputer des Zahlungssenders oder - wie in Figur 1 dargestellt - um einen Rechner einer Bank, welche für den Zahlungssender arbeitet, handeln. Ebenso ist das Zahlungssystem ZS über einen Kommunikationskanal mit einem Zahlungsempfänger-Finanzrechner ZE-FR des Zahlungsempfängers (über den den Zahlungsempfänger betreffende finanzielle Transaktionen bearbeitet werden) verbindbar; bei diesem Finanzrechner handelt es sich in vorliegendem Ausführungsbeispiel um einen Rechner einer Bank, bei der der Zahlungsempfänger ein Konto besitzt.

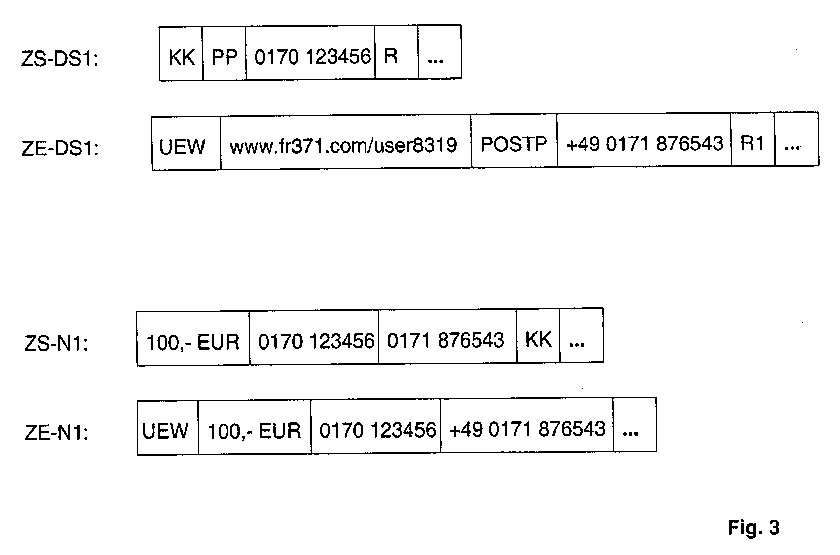

In Figur 3 ist der Aufbau des Zahlungssender-Datensatzes ZS-DS1 und des Zahlungsempfänger-Datensatzes ZE-DS1 dargestellt. Der in dem Datenspeicher DS gespeicherte Zahlungssender-Datensatz ZS-DS1 enthält Informationen über eine erste Zahlungsweise des Zahlungssenders. Bei dieser ersten Zahlungsweise handelt es sich im Ausführungsbeispiel um die Zahlung per Kreditkarte. Dies ist in der Figur 3 symbolisiert durch ein erstes Feld des Zahlungssender-Datensatzes, welches die Buchstaben "KK" enthält. Die Buchstaben "KK" stellen in der Figur 3 lediglich ein Symbol für sämtliche die Kreditkartenzahlung betreffende Daten dar; beispielsweise können in dem ersten Zahlungssender-Datensatz abgespeichert sein:
Art der Kreditkarte, ausstellende Bank, Kreditkartennummer und Gültigkeitsdauer.

In einem zweiten Feld des Zahlungssender-Datensatzes sind Informationen über eine weitere Zahlungsweise des Zahlungssenders enthalten: die Zeichenfolge "PP" symbolisiert sämtliche Daten, die Bezahlungen unter Benutzung eines Prepaid-Kontos (K-PP, vgl. Figur 1) des Zahlungssenders betreffen. Das Prepaid-Konto K-PP wird von dem Zahlungssystem ZS im Telekommunikationsnetz TKN verwaltet.
In einem dritten Feld des Zahlungssender-Datensatzes ZS-DS1 ist das Kennzeichen des Zahlungssenders abgespeichert (in diesem Falle dessen Mobilfunkrufnummer).
In einem vierten Datensatzfeld des Zahlungssender-Datensatzes ZS-DS1 ist eine Regel R abgespeichert, welche die Informationen enthält, bei welchen Zahlungsvorgängen die Zahlungsweise "KK - Zahlung über Kreditkarte" und bei welchen Zahlungsvorgängen die Zahlungsweise "PP - Zahlung über Prepaid-Konto" zu verwenden ist. Eine solche Regel R lautet beispielsweise:
Wenn Zahlungsbetrag < 50,-- EUR, dann verwende Zahlungsweise "PP - Zahlung über Prepaid-Konto"; ansonsten verwende Zahlungsweise "KK - Zahlung über Kreditkarte". Dieses vierte Datensatzfeld ist optional und braucht nicht belegt zu sein. Der Zahlungssender-Datensatz ZS-DS1 kann weitere Daten enthalten.

Der in der Figur 3 symbolisch dargestellte Zahlungsempfänger-Datensatz ZE-DS1 enthält in einem ersten Datensatzfeld Informationen über eine erste Zahlungsabwicklungsweise des Zahlungsempfängers. In diesem ersten Datensatzfeld stehen symbolhaft die Buchstaben "UEW", welche die Zahlungsweise "Überweisung" kennzeichnen und für alle Informationen stehen, welche notwendig sind, um eine Geld-Überweisung an den Zahlungsempfänger zu senden. In einem zweiten Datensatzfeld des Zahlungsempfänger-Datensatzes ZE-DS1 sind Rechnerdaten eines dieser Zahlungsweise zugehörigen Zahlungsempfänger-Finanzrechners (ZE-FR, vgl. Figur 1) enthalten. Als ein derartiges Rechnerdatum ist in Figur 3 die Internetadresse "www.fr371.com/user8319" dargestellt. Mit dieser Adresse kann das Zahlungssystem ZS Nachrichten an den Zahlungsempfänger-Finanzrechner ZE-FR der Figur 1 senden, um eine Geldüberweisung an den Zahlungsempfänger zu veranlassen.

Ein drittes Datensatzfeld des Zahlungsempfänger-Datensatzes ZE-DS1 enthält Informationen über eine weitere Zahlungsabwicklungsweise des Zahlungsempfängers, nämlich über den Empfang von Zahlungen mittels dessen "Postpaid-Kontos". Die diese Zahlungsabwicklungsweise betreffende Informationen sind symbolhaft als zeichenfolge "POSTP" dargestellt. Ein Postpaid-Konto K-PO (vgl. Figur 1) wird in dem Telekommunikationsnetz von dem Zahlungssystem ZS geführt und verwaltet. Der Zugriff auf dieses Postpaid-Konto erfolgt über das Kennzeichen (hier: die Mobilfunkrufnummer) des Zahlungsempfängers. Diese Mobilfunkrufnummer stellt Rechnerdaten eines der Zahlung über das Postpaid-Konto zugehörigen Zahlungsempfänger-Finanzrechners dar und ist in einem vierten Datensatzfeld des Zahlungsempfängerdatensatzes ZE-DS1 abgespeichert. Das Postpaid-Konto K-PO wird nämlich in dem Telekommunikationsnetz von einem Zahlungsempfänger-Finanzrechner in Form eines Dienstesteuerungspunktes SCP eines intelligenten Netzes IN (in den Figuren nicht dargestellt) in den Speichern dieses Dienstesteuerungspunktes realisiert.

In einem fünften Datensatzfeld des Zahlungsempfänger-Datensatzes ZE-DS1 ist eine Regel R1 abgespeichert, welche die Informationen enthält, bei welchen Zahlungsvorgängen die Zahlungsabwicklungsweise "Überweisung" und bei welchen Zahlungsvorgängen die Zahlungsabwicklungsweise "Zahlung über Postpaid-Konto" zu verwenden ist. Eine solche Regel R1 lautet beispielsweise:
Wenn Zahlungsbetrag < 50,-- EUR, dann verwende Zahlungsabwicklungsweise "Zahlung über Postpaid-Konto POSTP"; ansonsten verwende Zahlungsabwicklungsweise "Überweisung UEW".

Mit Hilfe von Figur 1 wird nun ein Ablauf des erfindungsgemäßen Verfahrens beispielhaft erläutert. Der Zahlungssender führt mit seinem Zahlungssender-Endgerät ZS-EG einen Kaufvorgang durch, betreffend beispielsweise aktuelle Wirtschaftsinformationen, welche auf dem Zahlungssender-Endgerät ZS-EG dargestellt werden sollen. Er wählt zur Bezahlung dieser Informationen die Zahlungsweise der Kreditkartenbezahlung, d. h. er bezahlt die Informationen unter Benutzung seiner Kreditkarte und unter Angabe der Kreditkartennummer. Einzelheiten dieses Kaufvorganges sind in der Figur 1 nicht dargestellt. Aufgrund dieses Kaufvorganges erzeugt der in diesem Ausführungsbeispiel diesem Kaufvorgang zugeordneter Zahlungs-Finanzrechner Z-FR (in diesem Beispiel ein Transaktions-Server der jeweiligen Kreditkartenorganisation) eine Zahlungssender-Nachricht ZS-N1. Der Aufbau dieser Zahlungssender-Nachricht wird mit Hilfe der Figur 3 im Folgenden näher erläutert.

In Figur 3 ist in der dritten Zeile der Aufbau der Zahlungssender-Nachricht ZS-N1 schematisch dargestellt. In einem ersten Feld der Zahlungssender-Nachricht ZS-N1 sind Informationen über den Zahlungsbetrag (in diesem Beispiel 100,-- EUR) enthalten, der vom Zahlungssender zu dem Zahlungsempfänger transferiert werden soll. In einem zweiten Nachrichtenfeld der Nachricht ist die Mobilfunkrufnummer "0170 123456" als Kennzeichen des Zahlungssenders und in einem dritten Nachrichtenfeld die Mobilfunkrufnummer "0171 876543" als Kennzeichen des Zahlungsempfängers enthalten. Ein viertes Feld der Zahlungssender-Nachricht ZS-N1 enthält Informationen über die Zahlungsweise des Zahlungssenders (in diesem Fall: "KK" - Kreditkartenzahlung).

Eine derartig aufgebaute Zahlungssender-Nachricht ZS-N1 wird nun entsprechend der Figur 1 von dem Zahlungs-Finanzrechner Z-FR an das Zahlungssystem ZS übertragen. Aufgrund des in der Zahlungssender-Nachricht ZS-N1 enthaltenen Kennzeichens des Zahlungssenders (0170 123456) wird der dem Zahlungssender zugehörige Zahlungssender-Datensatz ZS-DS1 von dem Zahlungssystem ZS aus dem Datenspeicher DS des Telekommunikationsnetzes TKN ausgelesen. Nun wird von dem Zahlungssystem ZS überprüft, ob die mittels der Zahlungssender-Nachricht ZS-N1 übermittelte Zahlungsweise (Kreditkartenzahlung KK) des Zahlungssenders mit einer der in dem Zahlungssender-Datensatz ZS-DS1 abgespeicherten Zahlungsweisen des Zahlungssenders übereinstimmt. Eine solche Übereinstimmung ist hier gegeben, da in dem Zahlungssender-Datensatz ZS-DS1 neben der Zahlungsweise "Zahlung mittels Prepaid-Konto PP" auch die Zahlungsweise "Kreditkartenzahlung KK" abgespeichert ist.

Optional kann anhand der Regel R des Zahlungssender-Datensatzes ZS-DS1 überprüft werden, ob die gewählte Zahlungsweise die für diesen Zahlungsvorgang "korrekte" Zahlungsweise ist. Dies ist hier der Fall, da der Zahlungsbetrag mit 100,-- EUR größer ist als der in der Regel R formulierte "untere Schwellwert" für die Kreditkartenzahlung in Höhe von 50,-- EUR. Falls die Zahlungsweise nicht "korrekt" gewählt wurde, können verschiedene Aktionen durchgeführt werden: der Zahlvorgang kann abgebrochen werden, es kann eine Warnmeldung an den Zahlungssender gesendet werden und der Zahlvorgang kann trotzdem weiterbehandelt werden oder ähnliches.

In diesem Ausführungsbeispiel wurde jedoch die "korrekte" Zahlungsweise "KK - Kreditkartenzahlung" gewählt. Daher wird in einem nächsten Schritt von dem Zahlungssystem aufgrund des in der Zahlungssender-Nachricht ZS-N1 übermittelten Kennzeichens (0171 876543) des Zahlungsempfängers der diesen Zahlungsempfänger zugehörige Zahlungsempfänger-Datensatz ZE-DS1 aus dem Datenspeicher DS ausgelesen.

Das Zahlungssystem ZS liest nun aus dem Zahlungsempfänger-Datensatz ZE-DS1 die dort gespeicherte Regel R1 aus und ermittelt anhand dieser Regel, welche Zahlungsabwicklungsweise bei diesem konkreten Zahlungsvorgang bezüglich des Zahlungsempfängers zu verwenden ist. Da der Zahlungsbetrag die Größe von 50,-- EUR überschreitet, ist in diesem Beispiel die Zahlungsabwicklungsweise "Überweisung UEW" zu verwenden. Also liest das Zahlungssystem die Informationen über die Zahlungsabwicklungsweise "UEW" und die Rechnerdaten "www.fr371.com/user8319" aus dem Zahlungsempfänger-Datensatz ZE-DS1 aus. Anhand dieser Informationen erzeugt nun das Zahlungssystem ZS eine Zahlungsempfänger-Nachricht ZE-N1, welche den in der letzten Zeile der Figur 3 dargestellten Aufbau besitzt. Aufgrund der Rechnerdaten des Zahlungsempfänger-Datensatzes ZE-DS1 ist dem Zahlungssystem bekannt, wie die Zahlungsempfänger-Nachricht ZE-N1 aufgebaut sein muss, damit diese von dem Zahlungsempfänger-Finanzrechner ZE-FR empfangen und deren Inhalt richtig interpretiert werden kann. Dieser Aufbau betrifft sowohl die Anordnung der einzelnen Felder der Nachricht als auch die Kodierung der Informationen in den einzelnen Nachrichtenfeldern. In einem ersten Feld der Zahlungsempfänger-Nachricht ZE-N1 werden Informationen bezüglich der Zahlungsabwicklungsweise "UEW" abgespeichert. Ein zweites Feld dieser Zahlungsempfänger-Nachricht enthält den Zahlbetrag "100,-- EUR", ein drittes Feld enthält das Kennzeichen des Zahlungssenders "0170 123456" und ein viertes Feld enthält das Kennzeichen "+49 0171 876543" des Zahlungsempfängers.

Schließlich wird diese Zahlungsempfänger-Nachricht ZE-N1 mittels der Adresse "www.fr371.com/user8319" der Rechnerdaten adressiert und an den Zahlungsempfänger-Finanzrechner ZE-FR gesendet. Der Zahlungsempfänger-Finanzrechner registriert daraufhin einen Zahlungseingang in Höhe von 100,-- EUR auf ein bei diesem Finanzrechner geführtes Konto des Zahlungsempfängers mit dem Kennzeichen "+49 0171 876543".

Damit ist der Zahlungsvorgang nach dem erfindungsgemäßen Verfahren abgeschlossen. Die weitere Behandlung der Daten durch den Zahlungsempfänger-Finanzrechner und ggf. eine Auszahlung von Bargeldbeständen an den Zahlungsempfänger finden in bank-üblicher Weise statt.

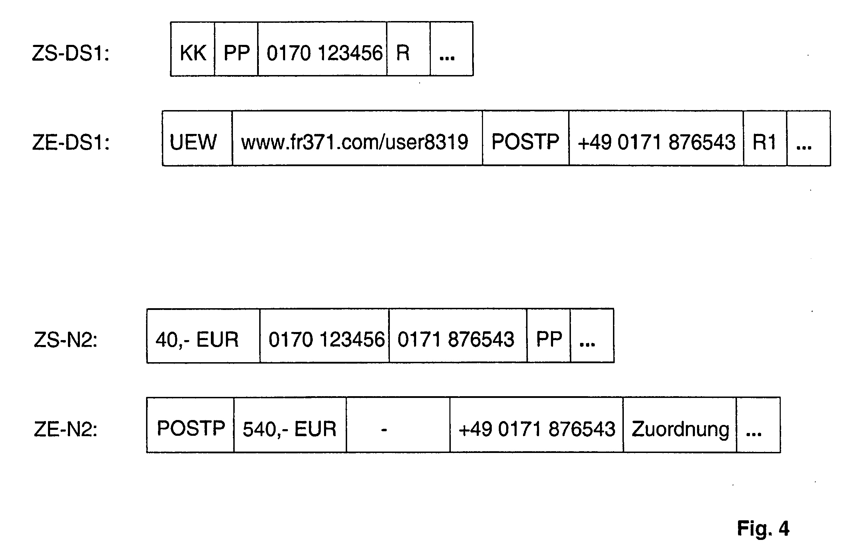

Mittels der Figur 1 soll ein weiteres Ausführungsbeispiel des erfindungsgemäßen Verfahrens erläutert werden. Die zugehörigen Datensätze und Nachrichten sind in Figur 4 dargestellt. Der Zahlungssender zahlt bei einem weiteren Kaufvorgang unter Benutzung der Zahlungsweise "Zahlung über Prepaid-Konto PP". Daher bildet eine Kontoführungseinrichtung K-PP eines Prepaid-Kontos des Zahlungssenders den diesem Kaufvorgang zugeordneten Zahlungs-Finanzrechner. Von diesem Zahlungssender-Finanzrechner K-PP wird eine zweite Zahlungssender-Nachricht ZS-N2 zu dem Zahlungssystem ZS gesendet, wobei die zweite Zahlungssender-Nachricht ZS-N2 den in Figur 4 dargestellten Aufbau besitzt. In einem vierten Feld dieser Nachricht ist nun als Zahlungsweise die Zahlung über Prepaid-Konto "PP" angegeben; der Zahlungsbetrag beträgt lediglich 40,-- EUR. Das Zahlungssystem ZS vergleicht diese Zahlungsweise mit den in dem Zahlungssender-Datensatz ZS-DS1 abgespeicherten Zahlungsweisen und findet zwar nicht bei der ersten dort abgespeicherten Zahlungsweise "Kreditkartenzahlung KK", aber bei einem weiteren Vergleich bei der in diesem Datensatz an zweiter Stelle abgespeicherten Zahlungsweise "Zahlung über Prepaid-Konto PP" eine Übereinstimmung. Daraufhin wird die Regel R1 des Zahlungsempfängers aus dem Zahlungsempfänger-Datensatz ZE-DS1 ausgelesen und anhand der Höhe des Zahlungsbetrages festgestellt, dass der Zahlungsempfänger die Zahlungsabwicklungsweise "Zahlung über Postpaid-Konto POSTP" für diesen Zahlungsvorgang verwendet. Daraufhin nutzt das Zahlungssystem ZS ein Zwischenkonto K2 des Zahlungsempfängers, welches von dem Zahlungssystem in einem mit dem Zahlungssystem verbundenen Kontenspeicher KS verwaltet wird. Auf diesem Zwischenkonto K2 wird der Zahlungsbetrag "40,-- EUR" und das Kennzeichen des Zahlungssenders "0170 123456" zwischengespeichert. Dieser Zahlungsbetrag wird mit auf diesem Zwischenkonto K2 eventuell bereits zwischengespeicherten weiteren Zahlungsbeträgen aufsummiert. Bei Erreichen des Endes eines vorbestimmten zeitlichen Abrechnungszeitraumes (beispielsweise am Ende eines Tages) wird nun eine zweite Zahlungsempfänger-Nachricht ZE-N2 erzeugt, die anstelle des Zahlungsbetrages "40,-- EUR" nun die aufaddierten Zahlungsbeträge (also beispielsweise einen Summen-Zahlungsbetrag 540,-- EUR) enthält, wobei in diesem Summen-Zahlungsbetrag von 540,-- EUR die oben genannten 40,-EUR enthalten sind. Eine derartige zweite Zahlungsempfänger-Nachricht ZE-N2 wird nun von dem Zahlungssystem ZS an das Postpaid-Konto K-PO des Zahlungsempfängers gesendet. Bei Empfang dieser Zahlungsempfänger-Nachricht ZE-N2 wird von der Kontoführungseinrichtung auf diesem Postpaid-Konto der Betrag (540,-- EUR) gutgeschrieben. Die Zahlungsempfänger-Nachricht ZE-N2 enthält in einer alternativen Ausführungsform (beispielsweise in einem fünften Nachrichtenfeld) Informationen über die einzelnen Zahlungsbeträge (40,-- EUR usw.), aus denen sich der aufaddierte zahlungsbetrag zusammensetzt und die Kennzeichen der einzelnen Zahlungssender. Mittels dieser optional übermittelten Informationen kann seitens des Zahlungsempfängers eine Zuordnung der gezahlten Beträge zu den einzelnen Zahlungssendern vorgenommen werden. Damit ist der zweite beispielhafte Zahlungsvorgang beendet.

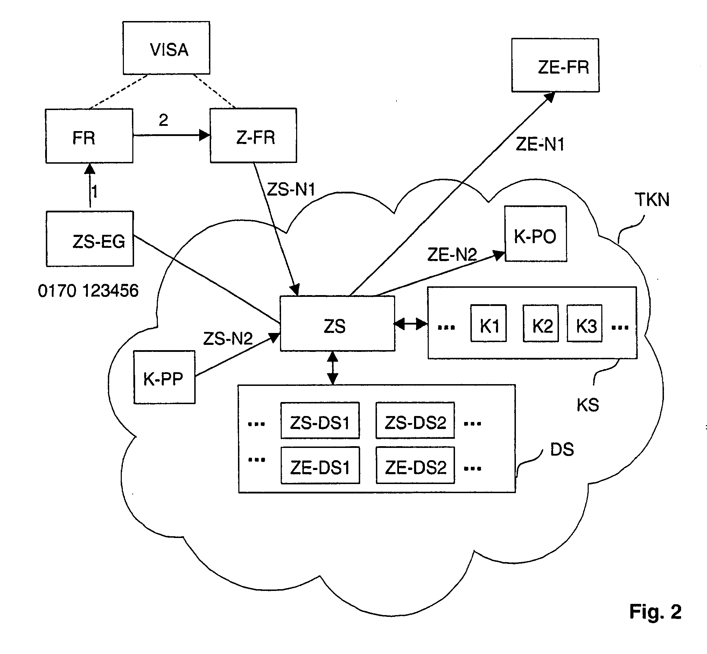

In Figur 2 sind beispielhaft weitere Vorgänge dargestellt, welche bei einem weiteren beispielhaften Zahlungsvorgang stattfinden, bevor der Zahlungs-Finanzrechner Z-FR die Zahlungssender-Nachricht ZS-N1 sendet. Der Zahlungssender bekommt von der Bank (Issuing Bank), welche ihm seine Kreditkarte ausgestellt hat, eine Abrechnung über die von dem Zahlungssender getätigten Käufe. Der entsprechende Geldbetrag des Zahlungssenders wird beispielsweise per Lastschrift von einem Girokonto des Zahlungssenders eingezogen (Pfeil 1: Zahlungssender bezahlt seine Kreditkartenrechnung). Ein Finanzrechner FR dieser Kreditkarten ausstellenden Bank übermittelt Informationen über den gezahlten Geldbetrag an den zahlungs-Finanzrechner Z-FR, der in diesem Fall einen Finanzrechner einer Kreditkartentransaktionen ausführenden, dem Zahlungssystem ZS zugeordneten Bank darstellt (Pfeil 2: Clearing). Daraufhin wird von dem Zahlungs-Finanzrechner Z-FR in bekannter Weise die Zahlungssender-Nachricht ZS-N1 erzeugt und an das Zahlungssystem ZS übermittelt. Die weiteren Abläufe entsprechen denen im Zusammenhang mit der in Figur 1 erläuterten Abläufen.

Das beschriebene erfindungsgemäße Verfahren weist eine Reihe von Vorteilen auf. Der Zahlungssender ist bezüglich seiner Zahlungsweisen unabhängig von den von dem Zahlungsempfänger benutzten Zahlungsabwicklungsweisen bzw. Zahlungsmitteln. Der Zahlungssender kann sämtliche von ihm beim Zahlungssystem in dem Zahlungssender-Datenspeicher ZS-DS1 hinterlegten (internen und externen) Zahlungsweisen bzw. Zahlungsmittel verwenden.

Der Zahlungsempfänger braucht nicht mit mehreren Finanzinstitutionen oder Partnern Verträge abzuschließen; das Durchführen der Zahlungsvorgänge wird durch das Zahlungssystem ZS gesteuert und geregelt. Dies ist insbesondere für kleinere Unternehmen äußerst vorteilhaft, da es derartigen Zahlungsempfängern ermöglicht wird, bestehende Dienstleistungen eines Zahlungssystems zu nutzen. Dadurch wird für den Zahlungsempfänger eine kostengünstige und unaufwendige Durchführung von Zahlungsvorgängen ermöglicht. Wenn der Zahlungsempfänger ein Diensteanbieter ist, so kann er sich auf seine zu erbringenden Dienste konzentrieren. Das Zahlungssystem stellt für diesen Diensteanbieter einen sogenannten "Single Point of Entry" dar. Das Zahlungssystem bzw. der Betreiber des Zahlungssystems ist in die Durchführung von Zahlungsvorgängen unmittelbar eingeschaltet, der Geldmittelausgleich (Clearing) läuft unter Benutzung des Zahlungssystems ab. Daher stellt der Betrieb eines derartigen Zahlungssystems eine attraktive Geschäftsmöglichkeit dar, bei der zudem die Einschaltung einer externen Clearing-Instanz nicht notwendig ist.

Es ist ein besonderer Vorteil des erfindungsgemäßen Verfahrens, dass mit ihm die Durchführung von Zahlungsvorgängen auch dann ermöglicht wird, wenn der Zahlungssender und der Zahlungsempfänger unterschiedliche Zahlungsweisen bzw. Zahlungsabwicklungsweisen anwenden. Das Verfahren ist z. B. auch dann durchführbar, wenn der Zahlungssender lediglich als einzige Zahlungsweise die Zahlung der Kreditkarte benutzt, während der Zahlungsempfänger als einzige Zahlungsabwicklungsweise eine Überweisung auf sein Bankkonto akzeptiert. Somit können durch Anwendung des erfindungsgemäßen Verfahrens Zahlungsvorgänge zwischen Zahlungspartnern (Zahlungssendern und Zahlungsempfängern) durchgeführt werden, welche keine übereinstimmenden Zahlungsweisen und Zahlungsabwicklungsweisen für ihre Zahlungsvorgänge anwenden.

## Patentansprüche

1. Verfahren zum elektronischen Verarbeiten von Zahlvorgänge betreffenden Nachrichten mittels eines Telekommunikationsnetzes (TKN),
mit einem Zahlungssystem (ZS) im Telekommunikationsnetz (TKN),
mit einem dem Zahlungssystem zugeordneten Datenspeicher (DS), in dem ein Zahlungssender-Datensatz (ZS-DS1) abgespeichert ist, der Informationen (KK) über eine Zahlungsweise des Zahlungssenders enthält,
mit einem mit dem Telekommunikationsnetz verbundenen Zahlungs-Finanzrechner (Z-FR), und
mit einem mit dem Telekommunikationsnetz verbundenen Zahlungsempfänger-Finanzrechner (ZE-FR), wobei bei dem Verfahren
- von dem Zahlungs-Finanzrechner (Z-FR) eine Zahlungssender-Nachricht (ZS-N1) an das Zahlungssystem (ZS) übermittelt wird, die einen Zahlungsbetrag, ein Kennzeichen (1070 123456) des Zahlungssenders, ein Kennzeichen (0171 876543) des Zahlungsempfängers und eine die Zahlungsweise des Zahlungssenders beschreibende Zahlungsinformation (KK) enthält,
- aufgrund des in der Zahlungssender-Nachricht (ZS-N1) enthaltenen Kennzeichens (0170 123456) des Zahlungssenders der dem Zahlungssender zugehörige Zahlungssender-Datensatz (ZS-DS1) von dem Zahlungssystem (ZS) aus dem Datenspeicher (DS) ausgelesen wird,
- von dem Zahlungssystem (ZS) überprüft wird, ob die mit der Zahlungssender-Nachricht (ZS-N1) übermittelte Zahlungsinformation (KK) des Zahlungssenders mit der in dem Zahlungssender-Datensatz abgespeicherten Zahlungsinformation (KK) übereinstimmt,
- bei einer Übereinstimmung aus einem dem Zahlungsempfänger zugehörigen Zahlungsempfänger-Datensatz (ZE-DS1) Informationen (UEW) über die Zahlungsabwicklungsweise des Zahlungsempfängers und Rechnerdaten (www.fr371.com) des für diese Zahlungsabwicklungsweise geeigneten Zahlungsempfänger-Finanzrechners (ZE-FR) ausgelesen werden, wobei aufgrund des in der Zahlungssender-Nachricht (ZS-N1) übermittelten Kennzeichens (0171 876543) des Zahlungsempfängers der Zahlungsempfänger-Datensatz (ZE-DS1) aus dem Datenspeicher (DS) ausgelesen wird,
- anhand dieser Informationen eine Zahlungsempfänger-Nachricht (ZE-N1) erzeugt wird, welche den Zahlungsbetrag und das Kennzeichen (0170 123456) des Zahlungssenders enthält und welche derart aufgebaut ist, dass ihr Inhalt bei Empfang von dem Zahlungsempfänger-Finanzrechner (ZE-FR) korrekt interpretiert wird, und
- anhand der Rechnerdaten (www.fr371.com) des Zahlungsempfänger-Finanzrechners (ZE-FR) diese Zahlungsempfänger-Nachricht (ZE-N1) an den Zahlungsempfänger-Finanzrechner (ZE-FR) gesendet wird, woraufhin der Zahlungsempfänger-Finanzrechner (ZE-FR) einen Zahlungseingang registriert.

2. Verfahren nach Anspruch 1,
**dadurch gekennzeichnet, dass**
- in dem Zahlungssender-Datensatz (ZS-DS1) Informationen (KK,PP) über mehrere Zahlungsweisen des Zahlungssenders enthalten sind, und
- von dem Zahlungssystem (ZS) nacheinander solange überprüft wird, ob die durch die Zahlungsinformation (KK) beschriebene Zahlungsweise des Zahlungssenders mit einer der in dem Zahlungssender-Datensatz (ZS-DS1) abgespeicherten Zahlungsweisen übereinstimmt, bis eine Übereinstimmung auftritt oder bis alle abgespeicherten Informationen über die Zahlungsweisen überprüft sind.

3. Verfahren nach Anspruch 1 oder 2,
**dadurch gekennzeichnet, dass**
- in dem Zahlungsempfänger-Datensatz (ZE-DS1) Informationen (UEW,POSTP) über mehrere Zahlungsabwicklungsweisen des Zahlungsempfängers enthalten sind,
- und von dem Zahlungssystem (ZS) anhand von einer vorbestimmten, in dem Zahlungsempfänger-Datensatz (ZE-DS1) gespeicherten Regel (R) eine der mehreren Zahlungsabwicklungsweisen (UEW) ausgewählt und Informationen (www.fr371.com) über diese ausgewählte Zahlungsabwicklungsweise ausgelesen werden.

4. Verfahren nach einem der vorhergehenden Ansprüche,
**dadurch gekennzeichnet, dass**
- vor der Erzeugung der Zahlungsempfänger-Nachricht (ZE-N2) von dem Zahlungssystem (ZS) auf einem dem Zahlungsempfänger zugeordneten Zwischenkonto (K2) der Zahlungsbetrag und das Kennzeichen des Zahlungssenders (0170 123456) zwischengespeichert werden,
- der Zahlungsbetrag mit auf diesem Zwischenkonto bereits zwischengespeicherten weiteren Zahlungsbeträgen aufsummiert wird, und
- erst bei Erreichen des Endes eines vorbestimmten zeitlichen Abrechnungszeitraumes eine Zahlungsempfänger-Nachricht (ZE-N2) erzeugt wird, die anstelle des Zahlungsbetrages die aufsummierten Zahlungsbeträge enthält.

5. Verfahren nach einem der vorhergehenden Ansprüche,
**dadurch gekennzeichnet, dass**
- Informationen über einen Geldbetrag von einem Finanzrechner (FR) einer kreditkartenausstellenden Bank des Zahlungssenders an den Zahlungs-Finanzrechner (Z-FR) einer Kreditkartentransaktionen ausführenden, dem Zahlungssystem zugeordneten Bank übermittelt wird, und daraufhin von dem zahlungs-Finanzrechner (Z-FR) die Zahlungssender-Nachricht (ZS-N1) an das Zahlungssystem (ZS) übermittelt wird.

## Claims

1. Method for electronically processing messages relating to payment transactions using a telecommunication network (TKN), with a payment system (ZS) in the telecommunication network (TKN),
with a data store (DS) which is associated with the payment system and which stores a payment sender data record (ZS-DS1) containing information (KK) about a mode of payment for the payment sender,
with a payment financial computer (Z-FR) which is connected to the telecommunication network, and
with a payment receiver financial computer (ZE-FR) which is connected to the telecommunication network, where the method involves
- the payment financial computer (Z-FR) transmitting a payment sender message (ZS-N1) to the payment system (ZS), which payment sender message contains a payment sum, an identifier (1070 123456) for the payment sender, an identifier (0171 876543) for the payment receiver and a payment information item (KK) describing the mode of payment for the payment sender,
- the payment system (ZS) taking the payment sender's identifier (0170 123456) contained in the payment sender message (ZS-N1) as a basis for reading the payment sender data record (ZS-DS1) associated with the payment sender from the data store (DS),
- the payment system (ZS) checking whether the payment sender's payment information item (KK) transmitted with the payment sender message (ZS-N1) matches the payment information item (KK) stored in the payment sender data record,
- a match prompting information (UEW) about the payment receiver's payment handling method and computer data (www.fr371.com) from the payment receiver financial computer (ZE-FR) which is suitable for this payment handling method to be read from a payment receiver data record (ZE-DS1) associated with the payment receiver, with the payment receiver data record (ZE-DS1) being read from the data store (DS) on the basis of the payment receiver's identifier (0171 876543) transmitted in the payment sender message (ZS-N1),
- this information being used to produce a payment receiver message (ZE-N1) which contains the payment sum and the identifier (0170 123456) of the payment sender and which is designed such that its content is interpreted correctly upon being received by the payment receiver financial computer (ZE-FR), and
- the computer data (www.fr371.com) from the payment receiver financial computer (ZE-FR) being used to send this payment receiver message (ZE-N1) to the payment receiver financial computer (ZE-FR), whereupon the payment receiver financial computer (ZE-FR) records a receipt of payment.

2. Method according to Claim 1,
**characterized in that**
- the payment sender data record (ZS-DS1) contains information (KK, PP) about a plurality of modes of payment for the payment sender, and
- the payment system (ZS) successively checks whether the payment sender's mode of payment described by the payment information item (KK) matches one of the modes of payment stored in the payment sender data record (ZS-DS1) until a match is found or until all the stored information about the modes of payment have been checked.

3. Method according to Claim 1 or 2,
**characterized in that**
- the payment receiver data record (ZE-DS1) contains information (UEW, POSTP) about a plurality of payment handling methods which are used by the payment receiver,
- and the payment system (ZS) uses a predetermined rule (R) stored in the payment receiver data record (ZE-DS1) to select one of the plurality of payment handling methods (UEW) and reads information (www.fr371.com) about this selected payment handling method.

4. Method according to one of the preceding claims,
**characterized in that**
- before the payment receiver message (ZE-N2) is produced by the payment system (ZS) a suspense account (K2) associated with the payment receiver buffer-stores the payment sum and the identifier for the payment sender (0170 123456),
- the payment sum is added to other payment sums which have already been buffer-stored in this suspense account, and
- no sooner than when the end of a predetermined billing time period has been reached is a payment receiver message (ZE-N2) produced which contains the added payment sums instead of the payment sum.

5. Method according to one of the preceding claims,
**characterized in that**
- information about a sum of money is transmitted from a financial computer (FR) at a credit-card issuing bank for the payment sender to the payment financial computer (Z-FR) at a bank which is associated with the payment system and which performs credit card transactions, and then the payment financial computer (Z-FR) transmits the payment sender message (ZS-N1) to the payment system (ZS).

## Revendications

1. Procédé pour le traitement électronique de messages concernant des opérations de paiement au moyen d'un réseau de télécommunications (TKN),
avec un système de paiement (ZS) dans le réseau de télécommunications (TKN),
avec une mémoire de données (DS) qui est associée au système de paiement et dans laquelle est mémorisé un enregistrement de données d'émetteur de paiement (ZS-DS1) qui contient des informations (KK) sur un mode de paiement de l'émetteur de paiement,
avec un ordinateur financier de paiement (Z-FR) relié au réseau de télécommunications, et
avec un ordinateur financier de bénéficiaire de paiement (ZE-FR) relié au réseau de télécommunications,
procédé dans lequel
- l'ordinateur financier de paiement (Z-FR) transmet au système de paiement (ZS) un message d'émetteur de paiement (ZS-N1) qui contient un montant de paiement, un identificateur (0170 123456) de l'émetteur de paiement, un identificateur (0171 876543) du bénéficiaire de paiement et une information de paiement (KK) décrivant le mode de paiement de l'émetteur de paiement,
- sur la base de l'identificateur (0170 123456) de l'émetteur de paiement contenu dans le message d'émetteur de paiement (ZS-N1), le système de paiement (ZS) lit dans la mémoire de données (DS) l'enregistrement de données d'émetteur de paiement (ZS-DS1) associé à l'émetteur de paiement,
- le système de paiement (ZS) vérifie si l'information de paiement (KK) de l'émetteur de paiement qui est transmise avec le message d'émetteur de paiement (ZS-N1) coïncide avec l'information de paiement (KK) mémorisée dans l'enregistrement de données d'émetteur de paiement,
- en cas de coïncidence, on lit dans un enregistrement de données de bénéficiaire de paiement (ZE-DS1) associé au bénéficiaire de paiement des informations (UEW) concernant le mode de d'exécution de paiement du bénéficiaire de paiement et des données informatiques (www.fr371.com) de l'ordinateur financier de bénéficiaire de paiement (ZE-FR) convenant à ce mode d'exécution de paiement, l'enregistrement de données de bénéficiaire de paiement (ZE-DS1) étant lu dans la mémoire de données (DS) sur la base de l'identificateur (0171 876543) du bénéficiaire de paiement transmis dans le message d'émetteur de paiement (ZS-N1),
- à l'aide de ces informations, on produit un message de bénéficiaire de paiement (ZE-N1) qui contient le montant de paiement et l'identificateur (0170 123456) de l'émetteur de paiement et qui est structuré de telle sorte que son contenu est interprété correctement lors de la réception par l'ordinateur financier de bénéficiaire de paiement (ZE-FR), et
- à l'aide des données informatiques (www.fr371.com) de l'ordinateur financier de bénéficiaire de paiement (ZE-FR), on envoie ce message de bénéficiaire de paiement (ZEN1) à l'ordinateur financier de bénéficiaire de paiement (ZE-FR), à la suite de quoi l'ordinateur financier de bénéficiaire de paiement (ZE-FR) enregistre une entrée de paiement.

2. Procédé selon la revendication 1,
**caractérisé par le fait que**
- l'enregistrement de données d'émetteur de paiement (ZS-DS1) contient des informations (KK, PP) sur plusieurs modes de paiement de l'émetteur de paiement, et
- le système de paiement (ZS) vérifie successivement si le mode de paiement de l'émetteur de paiement décrit par l'information de paiement (KK) coïncide avec l'un des modes de paiement mémorisés dans l'enregistrement de données d'émetteur de paiement (ZS-DS1) jusqu'à ce qu'une coïncidence apparaisse ou jusqu'à ce que toutes les informations mémorisées concernant les modes de paiement soient vérifiées.

3. Procédé selon la revendication 1 ou 2,
**caractérisé par le fait que**
- l'enregistrement de données de bénéficiaire de paiement (ZE-DS1) contient des informations (UEW, POSTP) sur plusieurs modes d'exécution de paiement du bénéficiaire de paiement,
- et le système de paiement (ZS) sélectionne à l'aide d'une règle prescrite (R) mémorisée dans l'enregistrement de données de bénéficiaire de paiement (ZE-DS1) l'un des modes d'exécution de paiement (UEW) et lit des informations (www.fr371.com) sur ce mode d'exécution de paiement sélectionné.

4. Procédé selon l'une des revendications précédentes,
**caractérisé par le fait que**
- avant la production du message de bénéficiaire de paiement (ZE-N2), le système de paiement (ZS) mémorise temporairement sur un compte intermédiaire (K2) associé au bénéficiaire de paiement le montant de paiement et l'identificateur de l'émetteur de paiement (0170 123456),
- on ajoute le montant de paiement à d'autres montants de paiement déjà mémorisés temporairement sur ce compte intermédiaire, et
- c'est seulement lorsque la fin d'un intervalle de temps comptable prescrit est atteinte que l'on produit un message de bénéficiaire de paiement (ZE-N2) qui contient les montants de paiement cumulés à la place du montant de paiement.

5. Procédé selon l'une des revendications précédentes,
**caractérisé par le fait que**
- un ordinateur financier (FR) d'une banque, proposant des cartes de crédit, de l'émetteur de paiement transmet des informations sur une somme d'argent à l'ordinateur financier de paiement (Z-FR) d'une banque réalisant des transactions de cartes de crédit et associée au système de paiement puis l'ordinateur financier de paiement (Z-FR) transmet le message d'émetteur de paiement (ZS-N1) au système de paiement (ZS).
